(19) **Europäisches Patentamt**

**European Patent Office**

**Office européen des brevets**

(11) **EP 1 308 387 B1**

(12) **FASCICULE DE BREVET EUROPEEN**

(45) Date de publication et mention
de la délivrance du brevet:
**26.07.2006 Bulletin 2006/30**

(51) Int Cl.:
*B64D 33/02* (2006.01) *F02C 7/045* (2006.01)

(21) Numéro de dépôt: **02292283.5**

(22) Date de dépôt: **18.09.2002**

(54) **Entrée d'air pour nacelle de moteur à réaction d'avion commercial**

Lufteinlass für ein Strahltriebwerk eines Passagierflugzeugs

Air inlet for a jet engine of a commercial airplane

(84) Etats contractants désignés:
**AT BE BG CH CY CZ DE DK EE ES FI FR GB GR
IE IT LI LU MC NL PT SE SK TR**

(30) Priorité: **02.11.2001 FR 0114222**

(43) Date de publication de la demande:
**07.05.2003 Bulletin 2003/19**

(73) Titulaire: **AIRBUS France**
**31060 Toulouse (FR)**

(72) Inventeurs:
• **Surply, Thierry**
**31700 Cornebarrieu (FR)**
• **Prat, Damien**
**31770 Colomiers (FR)**
• **Gagnaire, Benoît**
**31770 Colomiers (FR)**

(74) Mandataire: **Bonnetat, Christian**
**CABINET BONNETAT**
**29, rue de St. Pétersbourg**
**75008 Paris (FR)**

(56) Documents cités:
DE-C- 850 970          GB-A- 1 468 826
US-A- 3 485 252        US-A- 3 765 623
US-A- 5 058 617        US-A- 5 702 231
US-A- 5 915 403

• ANDREW T L ET AL: "HIGH SPEED TEST
RESULTS OF SUBSONIC, TURBOFAN SCARF
INLETS" AIAA PAPER, AMERICAN INSTITUTE OF
AERONAUTICS AND ASTRONAUTICS, NEW
YORK,, US, no. 93-2302, 1993, pages 1-12,
XP000856986 ISSN: 0146-3705
• CRUM T S ET AL: "LOW SPEED TEST RESULTS
OF SUBSONIC, TURBOFAN SCARF INLETS"
AIAA PAPER, AMERICAN INSTITUTE OF
AERONAUTICS AND ASTRONAUTICS, NEW
YORK,, US, no. 93-2301, 1993, pages 1-10,
XP000856987 ISSN: 0146-3705

**Description**

La présente invention concerne une entrée d'air pour la nacelle d'un moteur à réaction d'avion commercial, ladite entrée d'air étant coaxiale audit moteur et présentant la forme d'une lèvre annulaire à bord arrondi, constituant le bord d'attaque de ladite nacelle. Plus particulièrement, l'entrée d'air de la présente invention est du type en biseau -- appelé "scarf" dans le langage aéronautique technique-- dans lequel le bord d'attaque est incliné par rapport à l'axe dudit moteur, la partie inférieure de ladite lèvre faisant saillie vers l'avant par rapport à la partie supérieure de celle-ci.

Une telle entrée d'air en biseau, à bord inférieur avancé, est bien connue et est par exemple décrite dans le brevet US-3 946 830 et dans l'article "Aerodynamic Performance of Scarf Inlets" de John M. Abbott, NASA Technical Memorandum 79055, présenté aux 17èmes Rencontres des sciences aéronautiques de la Nouvelle Orléans, Louisiane, les 15 à 17 janvier 1979.

Un autre exemple d'une telle entrée d'air est décrit dans US-5 058 617. Celle-ci présente la forme d'une lèvre annulaire qui comporte :

- une surface aérodynamique annulaire externe se raccordant à la surface externe de ladite nacelle ;
- une surface aérodynamique annulaire interne se raccordant à la surface interne de ladite nacelle et canalisant l'air vers ledit moteur, ladite surface aérodynamique annulaire interne comportant un col annulaire et formant au moins en partie un diffuseur pour ledit moteur ; et
- un bord d'attaque annulaire plan formé au raccordement desdites surfaces aérodynamiques annulaires externe et interne,

de sorte que toute section de ladite lèvre annulaire par un plan diamétral faisant un angle par rapport au plan diamétral vertical de ladite entrée d'air comporte un profil externe, un profil interne, un col et un bord d'attaque correspondant respectivement aux traces, dans ledit plan diamétral, desdites surfaces aérodynamiques annulaires externe et interne, du col et dudit bord d'attaque annulaires,

ladite entrée d'air étant symétrique par rapport audit plan diamétral vertical et étant du type en biseau avec la partie inférieure de ladite lèvre avancée par rapport à la partie supérieure de celle-ci et ledit bord d'attaque annulaire incliné par rapport à l'axe de ladite entrée d'air, l'inclinaison dudit bord d'attaque annulaire étant définie, dans ledit plan diamétral vertical, par l'angle de scarf Sc entre la trace du plan dudit bord d'attaque et la direction perpendiculaire audit axe.

Par rapport aux entrées d'air droites --c'est-à-dire dont le plan du bord d'attaque est au moins approximativement orthogonal à l'axe du moteur-- les entrées d'air en biseau, à bord inférieur avancé, présentent de nombreux avantages, notamment en ce qui concerne la réduction du bruit, la résistance à l'ingestion de corps étrangers et l'angle d'attaque du bord inférieur. Cependant, ces entrées d'air en biseau présentent également certains inconvénients parmi lesquels des survitesses très élevées du flux d'air alimentant le moteur, à la partie supérieure interne de la lèvre dans les conditions de décollage de l'avion, avec ou sans vent latéral, ces survitesses pouvant, en cas de vent latéral et même au point fixe, conduire au pompage du moteur et, éventuellement, à l'endommagement de celui-ci.

La présente invention a pour objet principal de remédier à ces inconvénients et de perfectionner les entrées d'air en biseau, à bord inférieur avancé, pour éviter ces survitesses excessives.

A cette fin, selon l'invention, l'entrée d'air pour la nacelle d'un moteur à réaction d'avion commercial, ladite entrée d'air ayant son axe confondu avec celui dudit moteur et présentant la forme rappelée ci-dessus, chaque section de ladite lèvre annulaire par un tel plan diamétral faisant un angle $\theta$ par rapport audit plan vertical étant définie par :

- le taux de contraction $CR(\theta)$, qui est égal au carré du rapport de la distance $E(\theta)$ du bord d'attaque audit axe et de la distance $C(\theta)$ du col audit axe ;
- la distance $a(\theta)$, parallèlement audit axe, entre le col et le bord d'attaque ;
- la distance $b(\theta)$, perpendiculairement audit axe, entre le col et le bord d'attaque ; et
- le rapport $r(\theta) = a(\theta)/b(\theta)$ ;

le taux de contraction $CR(\theta)$ et ce rapport $r(\theta)$ ayant respectivement les valeurs de base CRb et rb pour lesdites sections horizontales de ladite lèvre, pour lesquelles $\theta = 90°$, est remarquable en ce que :

- le taux de contraction $CR(0)$ de la section verticale supérieure $S(0)$ est égal à

$$CR(0) = CRb + a1 \times Sc,$$

expression dans laquelle a1 est une constante,

- le rapport r(0) de la section verticale supérieure est égal à :

$$r(O) = rb + a2 \times Sc,$$

expression dans laquelle a2 est une constante,

- le taux de contraction CR(θ) de la section supérieure S(θ) de la lèvre par ledit plan diamétral P(θ) faisant l'angle θ avec le plan vertical satisfait à l'équation :

$$CR(\theta) = CRb + [CR(O) - CRb] \times \cos\theta \ ;$$

et

- le rapport r(θ) de ladite section supérieure S(θ) de la lèvre par ledit plan diamétral P(θ) faisant l'angle θ avec le plan vertical satisfait à l'équation :

$$r(\theta) = rb + [r(O) - rb] \times \cos\theta.$$

Ainsi, grâce à la présente invention, on épaissit la surface aérodynamique annulaire interne de l'entrée d'air, à la partie supérieure de celle-ci, ce qui permet au flux d'air incident d'alimentation du moteur de contourner en douceur la partie supérieure du bord d'attaque et abaisse, en conséquence, les survitesses excessives correspondantes de ce flux d'air incident.

Lorsque l'angle de scarf Sc est exprimé en degrés, la constante a1 peut avoir une valeur comprise entre 0,002 et 0,008 et la constante a2 entre -0,03 et 0.

Pour arrondir encore plus le bord d'attaque de la partie supérieure de l'entrée d'air conforme à la présente invention et ainsi améliorer l'écoulement à basse vitesse de l'air incident, il est avantageux que :

- par rapport aux deux sections horizontales de ladite lèvre, le profil externe des sections supérieures de ladite lèvre comporte un renflement externe commençant derrière le bord d'attaque ;
- ledit renflement externe soit d'autant plus important que l'angle de scarf Sc est plus grand ; et
- ledit renflement externe soit maximal à la section verticale supérieure de la lèvre et décroisse, progressivement et symétriquement, en direction desdites sections horizontales, où il disparaît.

Si, pour chaque section supérieure de ladite lèvre annulaire par un plan diamétral, on appelle c(θ) la distance, perpendiculairement audit axe, entre le bord d'attaque et le point dudit profil externe, dont la distance d(θ) audit bord d'attaque, parallèlement audit axe, est égale au dixième de la distance du bord d'attaque à l'axe du moteur, le rapport ρ(θ)=c(θ)/d(θ), avec θ=90°, correspondant aux sections horizontales présentant la valeur de base pb, un tel renflement externe peut être caractérisé par les particularités suivantes :

- le rapport ρ(0) de la section verticale supérieure est égal à

$$\rho(O) = \rho b + a3 \times Sc,$$

expression dans laquelle a3 est une constante ; et

- le rapport ρ(θ) de la section supérieure de la lèvre par ledit plan diamétral faisant l'angle θ avec le plan vertical satisfait à l'équation :

$$\rho(\theta) = \rho b + [\rho(O) - \rho b] \times \cos\theta.$$

L'angle de scarf Sc étant exprimé en degrés, la constante a3 peut présenter une valeur comprise entre 0 et 0,04.

De préférence, dans l'entrée d'air conforme à la présente invention :

- le profil interne des sections inférieures de ladite lèvre peut présenter un taux de contraction supérieur au taux de contraction de base CRb ; et
- ce taux de contraction supérieur est alors maximal à la section verticale inférieure de ladite lèvre et décroît, progressivement et symétriquement, en direction desdites sections horizontales où il prend la valeur CRb.

Par ailleurs, pour améliorer encore plus les conditions d'entrée du flux d'air dans ladite entrée d'air conforme à la présente invention, il est avantageux que :

- le profil interne des sections inférieures de ladite lèvre comporte, en arrière du bord d'attaque, un amincissement imposant une position du col reculée vers l'arrière ;
- ledit amincissement soit d'autant plus important que l'angle de scarf Sc est plus grand ; et
- ledit amincissement soit maximal à la section verticale inférieure de ladite lèvre et décroisse, progressivement et symétriquement, en direction desdites sections horizontales, où il disparaît.

Les figures du dessin annexé feront bien comprendre comment l'invention peut être réalisée. Sur ces figures, des références identiques désignent des éléments semblables.

La figure 1 est une vue de face schématique d'une entrée d'air conforme à la présente invention.

La figure 2 est une coupe diamétrale schématique de l'entrée d'air de la figure 1, par un plan diamétral P($\theta$) incliné de l'angle $\theta$ par rapport au plan diamétral vertical V-V.

La figure 3 est une coupe diamétrale schématique de l'entrée d'air de la figure 1, par le plan diamétral horizontal H-H.

La figure 4 est une coupe diamétrale schématique de l'entrée d'air de la figure 1, par le plan diamétral vertical V-V.

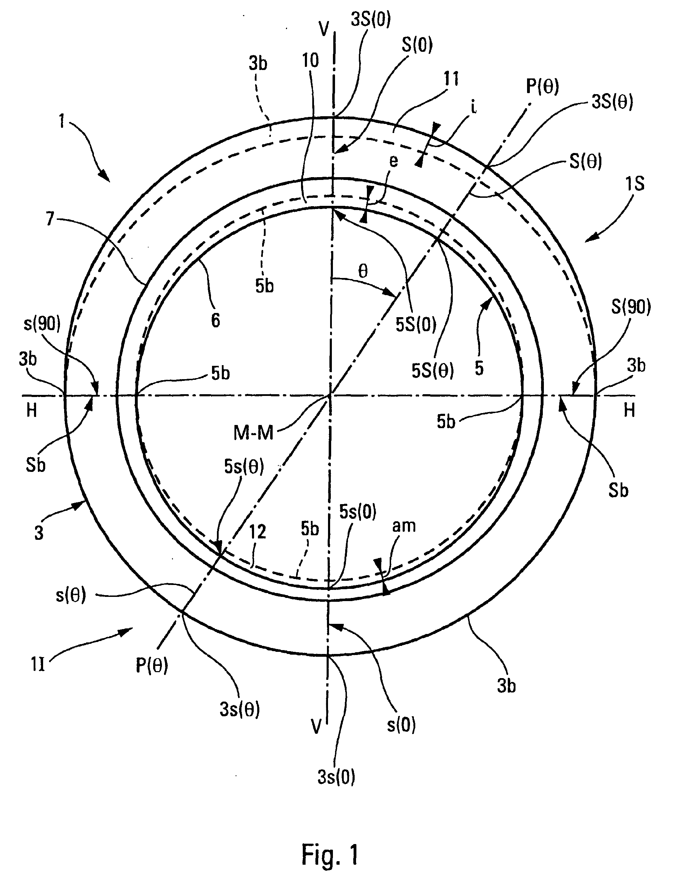

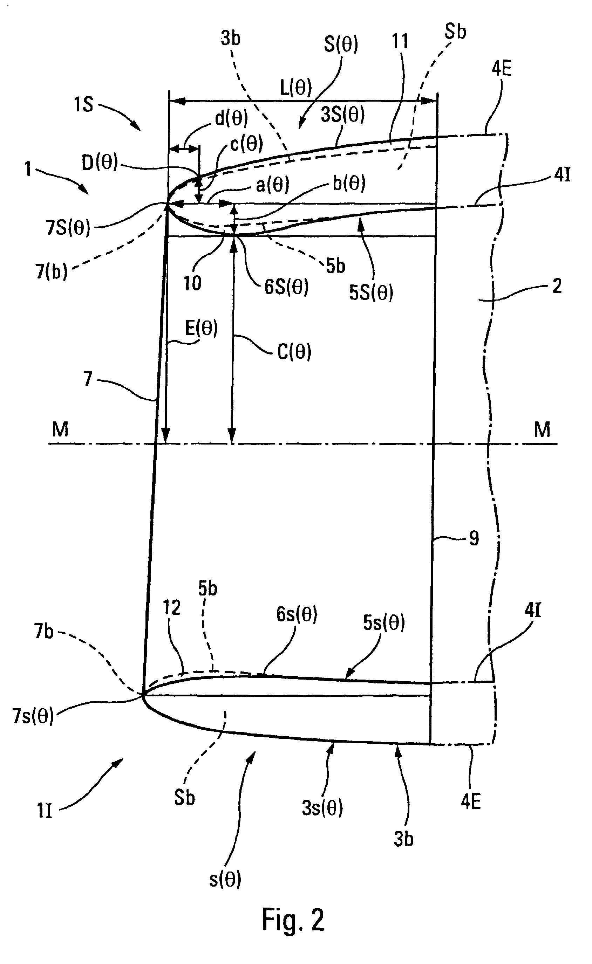

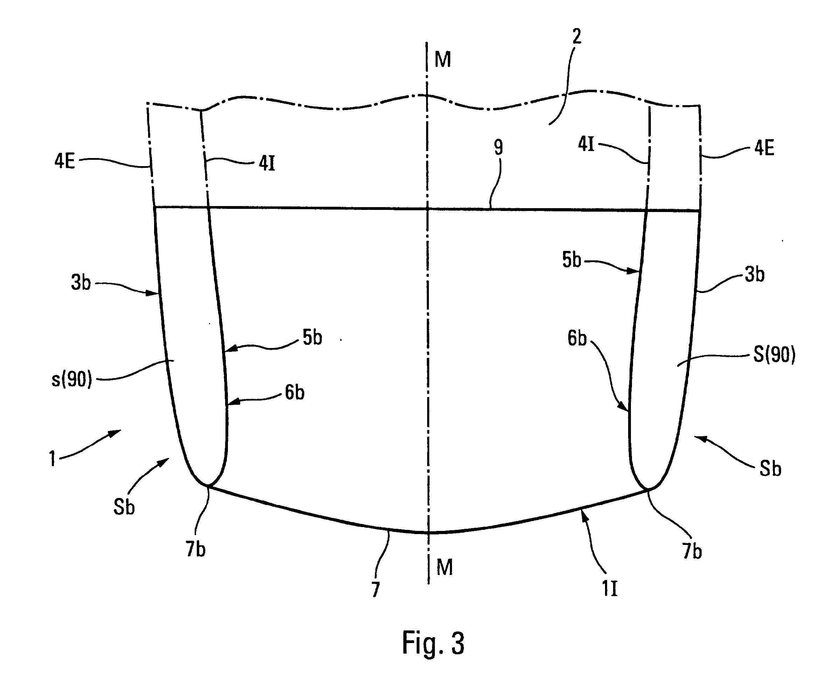

L'entrée d'air, conforme à la présente invention et montrée par les figures 1 à 4, présente la forme d'une lèvre annulaire 1 et est destiné à alimenter en air un moteur à réaction d'avion commercial (non représenté), ledit moteur étant logé dans une nacelle 2, indiquée schématiquement en traits mixtes sur les figures 2 à 4. La lèvre annulaire 1 est centrée sur l'axe M-M dudit moteur et elle est symétrique par rapport au plan diamétral vertical V-V. Elle forme le bord d'attaque annulaire de la nacelle 2.

La lèvre annulaire 1 comporte une surface aérodynamique annulaire externe 3 se raccordant à la surface externe 4E de la nacelle 2 et une surface aérodynamique annulaire interne 5 se raccordant à la surface interne 4I de ladite nacelle 2 et canalisant l'air vers ledit moteur. La surface aérodynamique annulaire interne 5 comporte un col 6, formé par le lieu géométrique des points de cette surface 5 auxquels la tangente est parallèle à l'axe M-M, de manière à former un diffuseur pour ledit moteur. Lesdites surfaces aérodynamiques 3 et 5 se raccordent, du côté opposé à la nacelle 2, le long d'un bord d'attaque aérodynamique 7, annulaire et arrondi.

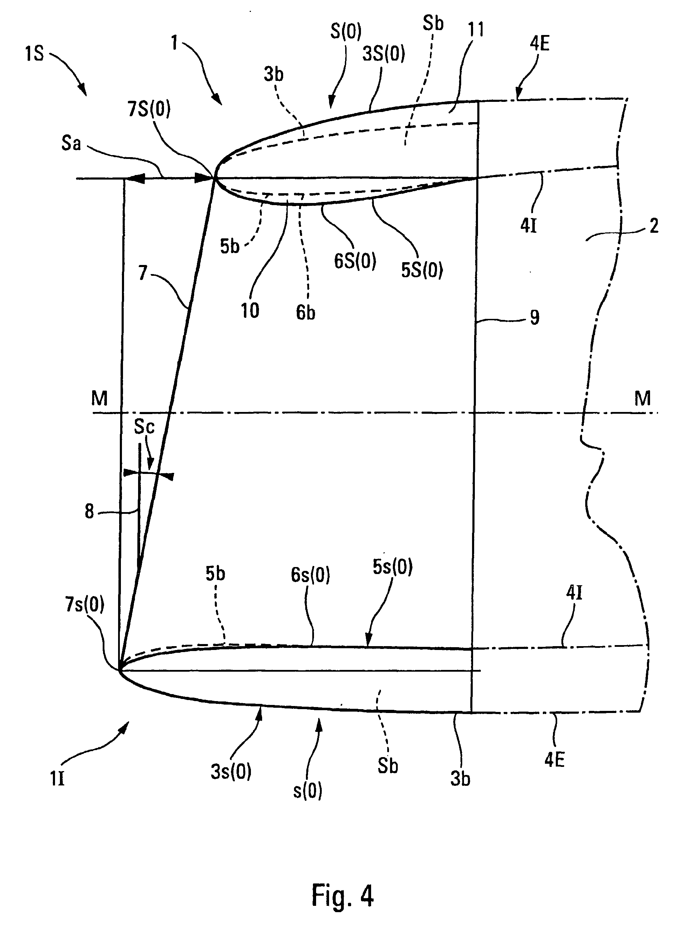

L'entrée d'air formée par la lèvre annulaire 1 est de type scarf, c'est-à-dire qu'elle présente une forme en biseau, le bord d'attaque 7 étant incliné par rapport à l'axe M-M et la partie inférieure 1I de ladite lèvre annulaire 1 faisant une saillie Sa vers l'avant par rapport à la partie supérieure 1S de celle-ci. De façon usuelle, l'inclinaison du bord d'attaque 7 est définie, dans le plan diamétral vertical V-V (voir la figure 4), par l'angle de scarf Sc, formé entre le bord d'attaque 7 et la direction 8 perpendiculaire à l'axe M-M.

Si on considère l'intersection de ladite lèvre annulaire 1 par un plan de coupe diamétral P($\theta$), incliné de l'angle $\theta$ par rapport au plan diamétral vertical V-V, on obtient une section supérieure S($\theta$), correspondant à ladite partie supérieure 1S, et une section inférieure s($\theta$), correspondant à ladite partie inférieure 1I (voir les figures 1 et 2). On remarquera que, du fait que la lèvre annulaire 1 est symétrique par rapport au plan diamétral vertical V-V, il suffit de faire varier $\theta$ entre 0 et 90° pour définir complètement en profil ladite lèvre annulaire 1.

Chaque section supérieure S($\theta$) est formée par un profil externe 3S($\theta$) et par un profil interne 5S($\theta$) correspondant respectivement aux traces des surfaces aérodynamiques annulaires externe 3 et interne 5. Bien entendu, le profil externe 3S($\theta$) et le profil interne 5S($\theta$) se rejoignent au bord d'attaque 7S($\theta$), qui est lui-même la trace du bord d'attaque 7 dans la section supérieure S($\theta$). La trace du col 6 dans cette section supérieure S($\theta$) forme le col 6S($\theta$) du profil interne 5S($\theta$).

De même, chaque section inférieure s($\theta$) est formée par un profil externe 3s($\theta$) et par un profil interne 5s($\theta$) correspondant respectivement aux traces des surfaces aérodynamiques annulaires externe 3 et interne 5. Le profil externe 3s($\theta$) et le profil interne 5s($\theta$) se rejoignent au bord d'attaque 7s($\theta$), qui est lui-même la trace du bord d'attaque 7 dans la section inférieure s($\theta$). La trace du col 6 dans cette section inférieure forme le col 6s($\theta$) du profil interne 5s($\theta$).

Outre par sa longueur L($\theta$), déterminée par la distance parallèlement à l'axe M-M entre son bord d'attaque et le plan 9 le long duquel la lèvre 1 est raccordée à la nacelle 2, chaque section par un plan P($\theta$) et, notamment, chaque section supérieure S($\theta$) peut être définie par :

- la distance E($\theta$) du bord d'attaque 7S($\theta$) à l'axe M-M ;

- la distance C(θ) du col 6S(θ) à l'axe M-M ;
- la distance a(θ), parallèlement à l'axe M-M, entre le col 6S(θ) et le bord d'attaque 7S(θ) ;
- la distance b(θ), perpendiculairement à l'axe M-M, entre le col 6S(θ) et le bord d'attaque 7S(θ) ;
- la distance c(θ), perpendiculairement à l'axe M-M, entre le bord d'attaque 7S(θ) et le point D(θ) du profil externe 3S(θ), qui lui-même est distant dudit bord d'attaque 7S(θ), parallèlement à l'axe M-M, d'une longueur d(θ) égale au dixième de la distance E(θ) ;
- le taux de contraction CR(θ), qui est égal au carré du rapport E(θ)/C(θ) ;
- le rapport r(θ) = a(θ)/b(θ) ; et
- le rapport ρ(θ) = c(θ)/d(θ).

On remarquera que les sections supérieures S(θ) et les sections inférieures s(θ) sont séparées les unes des autres par le plan diamétral horizontal H-H qui correspond au plan de coupe diamétral P(θ), pour lequel l'angle θ est égal à 90° et qui peut être désigné par P(90).

Dans ce plan diamétral horizontal P(90) ou H-H, les deux sections S(90) et s(90) sont identiques et symétriques par rapport à l'axe M-M. Elles constituent une base pour la lèvre 1 et sont désignées ci-après par Sb et sont formées par un profil externe 3b et par un profil interne 5b correspondant respectivement aux traces des surfaces aérodynamiques annulaires externe 3 et interne 5 dans le plan H-H. Dans chaque section Sb, les profils externe 3b et interne 5b se rejoignent au bord d'attaque 7b, qui est lui-même la trace du bord d'attaque 7 dans ledit plan. Les traces du col 6 dans le plan H-H forment les cols 6b des profils internes 5b.

Le taux de contraction CR(90) et le rapport r(90) de la section de base horizontale Sb sont désignés ci-après par CRb et rb, respectivement.

Sur les figures 2 et 4, on a représenté la section de base Sb en pointillés en superposition sur les sections supérieure et inférieure. De même, sur la figure 1, on a superposé en pointillés, sur la lèvre 1 de l'invention, une lèvre qui aurait une section constante constituée par ladite section de base Sb.

La figure 4, qui représente une coupe diamétrale verticale de la lèvre 1, correspond au plan de coupe diamétral V-V ou P(0), pour lequel l'angle θ est nul. Dans ce plan de coupe P(0), on retrouve donc, comme cela a été décrit ci-dessus pour le plan de coupe P(θ) :

- une section supérieure S(0), avec un profil externe 3S(0), un profil interne 5S(0), un col 6S(0) et un bord d'attaque 7S(0) ; et
- une section inférieure s(0), avec un profil externe 3s(0), un profil interne 5s(0), un col 6s(0) et un bord d'attaque 7s(0).

Comme cela est illustré par les figures 1, 2 et 4, selon la particularité la plus importante de la présente invention, la surface aérodynamique annulaire interne 5 des sections supérieures S(θ) comporte un renflement interne 10 en direction de l'axe M-M, un tel renflement étant délimité entre les profils 5b et 5S(θ). Le renflement interne 10 s'étend de part et d'autre du col 6b de ladite section de base Sb et son épaisseur e [entre les profils 5b et 5S(θ)] est d'autant plus grande que l'angle de scarf Sc est plus grand. De plus, l'épaisseur e est maximale à la section supérieure verticale S(0) et décroît, progressivement et symétriquement, en direction des sections horizontales S(90) et s(90), où ledit renflement interne 10 disparaît.

Dans un mode de réalisation avantageux :

- le taux de contraction CR(0) de la section verticale supérieure S(0) de l'entrée d'air conforme à la présente invention est égal à

$$CR(0) = CRb + a1 \times Sc,$$

a1 étant une constante, dont la valeur est par exemple comprise entre 0,002 et 0,008 si l'angle de scarf Sc est exprimé en degrés ;
- le rapport r(0) de la section verticale supérieure est égal à :

$$r(0) = rb + a2 \times Sc,$$

expression dans laquelle a2 est une constante, dont la valeur est par exemple comprise entre -0,03 et 0 si l'angle de scarf Sc est exprimé en degrés ;

- le taux de contraction CR(θ) de la section supérieure S(θ) de cette entrée d'air par ledit plan diamétral P(θ) faisant l'angle θ avec le plan diamétral vertical V-V satisfait à l'équation

$$CR(\theta) = CRb + [CR(0)\text{-}CRb] \times \cos\theta\ ;$$

et
- le rapport r(θ) de chaque section supérieure de l'entrée d'air par ledit plan diamétral P(θ) satisfait à l'équation :

$$r(\theta) = rb + [r(0) - rb] \times \cos\theta\ .$$

Par ailleurs, par rapport auxdites sections longitudinales symétriques S(90) et s(90) de l'entrée d'air de l'invention, le profil externe 3 des sections supérieures S(θ) de cette entrée d'air comporte un renflement externe 11 commençant derrière le bord d'attaque 7S(θ) et enveloppant le profil externe 3b. De plus, l'épaisseur i dudit renflement externe 11, comprise entre les profils 3b et 3S(θ)
- est d'autant plus importante que l'angle de scarf Sc est plus grand ; et
- est maximale à la section verticale supérieure S(0) de ladite entrée d'air et décroît, progressivement et symétriquement, en direction des sections horizontales S(90) et s(90) de cette entrée d'air, où ledit renflement externe 11 disparaît.

Les sections de base S(90) et s(90) présentant une valeur de base pb pour le rapport ρ(θ), il est avantageux à cet effet que :

- le rapport ρ(0) de la section verticale supérieure S(0) de ladite entrée d'air conforme à l'invention soit égale à

$$\rho(0) = \rho b + a3 \times Sc$$

a3 étant une constante, dont la valeur est comprise entre 0 et 0,04, si l'angle de scarf Sc est exprimé en degrés ; et
- le rapport ρ(θ) de la section supérieure de ladite entrée d'air par le plan diamétral faisant l'angle θ avec le plan vertical satisfasse à l'équation

$$\rho(\theta) = \rho b + [\rho(0)\text{-}\rho b] \times \cos\theta.$$

Selon une autre particularité de la présente invention, le profil interne 5s(θ) des sections inférieures s(θ) de la lèvre 1 peut présenter un taux de contraction cr(0) [défini par analogie avec ce qui a été mentionné ci-dessus comme le carré du rapport des distances E(θ) et C(θ) concernant lesdites sections inférieures s(θ)] supérieur au taux de contraction de base CRb défini ci-dessus pour la section de base Sb, ce taux de contraction cr(θ) étant maximal à la section verticale inférieure s(0) de la lèvre 1 et décroissant, progressivement et symétriquement, en direction desdites sections horizontales S(90) et s(90), où il prend la valeur CRb.
Que cette dernière particularité existe ou non dans la lèvre 1 de l'entrée d'air conforme à la présente invention, il est par ailleurs avantageux que :

- le profil interne 5s(θ) des sections inférieures s(θ) de la lèvre 1 comporte, en arrière du bord d'attaque 7s(θ) et par rapport à la section de base 5b, un amincissement 12 imposant une position reculée au col 6s(θ) ;
- ledit amincissement 12 présente une épaisseur am d'autant plus grande que l'angle de scarf Sc est plus grand ; et
- ledit amincissement 12 soit maximal à la section verticale inférieure s(0) de la lèvre 1 et décroisse, progressivement et symétriquement, en direction desdites sections horizontales S(90) et s(90), où il disparaît.

## Revendications

1.  Entrée d'air pour la nacelle (2) d'un moteur à réaction d'avion commercial, ladite entrée d'air ayant son axe (M-M) confondu avec celui dudit moteur et présentant la forme d'une lèvre annulaire (1) qui comporte :

- une surface aérodynamique annulaire externe (3) se raccordant à la surface externe (4E) de ladite nacelle (2) ;
- une surface aérodynamique annulaire interne (5) se raccordant à la surface interne (4I) de ladite nacelle (2) et canalisant l'air vers ledit moteur, ladite surface aérodynamique annulaire interne (5) comportant un col annulaire (6) et formant au moins en partie un diffuseur pour ledit moteur ; et
- un bord d'attaque annulaire plan (7) formé au raccordement desdites surfaces aérodynamiques annulaires externe (3) et interne (5),

de sorte que toute section de ladite lèvre annulaire (1) par un plan diamétral P(θ) faisant un angle par rapport au plan diamétral vertical (V-V) de ladite entrée d'air comporte un profil externe, un profil interne, un col et un bord d'attaque correspondant respectivement aux traces, dans ledit plan diamétral, desdites surfaces aérodynamiques annulaires externe (3) et interne (5), du col et dudit bord d'attaque annulaires,
ladite entrée d'air étant symétrique par rapport audit plan diamétral vertical (V-V) et étant du type en biseau avec la partie inférieure (1I) de ladite lèvre (1) avancée par rapport à la partie supérieure (1S) de celle-ci et ledit bord d'attaque annulaire (7) incliné par rapport audit axe (M-M), l'inclinaison dudit bord d'attaque annulaire (7) étant définie, dans ledit plan diamétral vertical (V-V), par l'angle de scarf Sc entre la trace du plan dudit bord d'attaque (7) et la direction (8) perpendiculaire audit axe, et chaque section de ladite lèvre annulaire (1) par un tel plan diamétral P(θ) étant définie par :

- le taux de contraction CR(θ), qui est égal au carré du rapport de la distance E(θ) du bord d'attaque audit axe et de la distance C(θ) du col audit axe ;
- la distance a(θ), parallèlement audit axe, entre le col et le bord d'attaque ;
- la distance b(θ), perpendiculairement audit axe, entre le col et le bord d'attaque ; et
- le rapport r(θ) = a(θ)/b(θ) ;

le taux de contraction CR(θ) et ce rapport r(θ) ayant respectivement les valeurs de base CRb et rb pour lesdites sections horizontales de ladite lèvre (1), pour lesquelles θ=90°,
**caractérisée en ce que** :

- le taux de contraction CR(0) de la section verticale supérieure S(0) est égal à

$$CR(0) = CRb + a1 \times Sc,$$

expression dans laquelle a1 est une constante ;
- le rapport r(0) de la section verticale supérieure est égal à :

$$r(0) = rb + a2 \times Sc,$$

expression dans laquelle a2 est une constante,
- le taux de contraction CR(θ) de la section supérieure S(θ) de la lèvre (1) par ledit plan diamétral P(θ) faisant l'angle θ avec le plan vertical satisfait à l'équation :

$$CR(\theta) = CRb + [CR(0) - CRb] \times \cos \theta \ ;$$

et
- le rapport r(θ) de ladite section supérieure S(θ) de la lèvre (1) par ledit plan diamétral P(θ) faisant l'angle θ avec le plan vertical satisfait à l'équation :

$$r(\theta) = rb + [r(O) - rb] \times \cos\theta.$$

2. Entrée d'air selon la revendication 1,
   **caractérisée en ce que**, l'angle de scarf Sc étant exprimé en degrés, la constante a1 a une valeur comprise entre 0,002 et 0,008.

3. Entrée d'air selon l'une des revendications 1 ou 2,
   **caractérisée en ce que**, l'angle de scarf Sc étant exprimé en degrés, la constante a2 a une valeur comprise entre -0,03 et 0.

4. Entrée d'air selon l'une des revendications 1 à 3,
   **caractérisée en ce que** :

   - par rapport aux deux sections horizontales (Sb) de ladite lèvre (1), le profil externe [3S($\theta$)] des sections supérieures S($\theta$) de ladite lèvre (1) comporte un renflement externe (11) commençant derrière le bord d'attaque [7S($\theta$)] ;
   - ledit renflement externe (11) est d'autant plus important que l'angle de scarf Sc est plus grand ; et
   - ledit renflement externe (11) est maximal à la section verticale supérieure S(0) de la lèvre (1) et décroît, progressivement et symétriquement, en direction desdites sections horizontales (Sb), où il disparaît.

5. Entrée d'air selon la revendication 4, dans laquelle, pour chaque section supérieure S($\theta$), on appelle c($\theta$) la distance, perpendiculaire audit axe, entre le bord d'attaque [7S($\theta$)] et le point D($\theta$) dudit profil externe [35($\theta$)], dont la distance d($\theta$) audit bord d'attaque, parallèlement audit axe, est égale au dixième de la distance E($\theta$) du bord d'attaque audit axe (M-M), le rapport $\rho(\theta)$ =c($\theta$)/d($\theta$) présentant la valeur de base pb pour lesdites sections horizontales de ladite lèvre (1),
   **caractérisée en ce que** :

   - le rapport p(0) de la section verticale supérieure S(0) est égal à

$$\rho(O) = \rho b + a3 \times Sc,$$

   expression dans laquelle a3 est une constante ; et
   - le rapport $\rho(\theta)$ de la section supérieure S($\theta$) de la lèvre par le plan diamétral faisant l'angle $\theta$ avec le plan vertical (V-V) satisfait à l'équation :

$$\rho(\theta) = \rho b + [\rho(O) - \rho b] \times \cos \theta.$$

6. Entrée d'air selon la revendication 5,
   **caractérisée en ce que**, l'angle de scarf Sc étant exprimé en degrés, la constante a3 a une valeur comprise entre 0 et 0,04.

7. Entrée d'air selon la revendication 1,
   **caractérisée en ce que** :

   - le profil interne [5s($\theta$)] des sections inférieures [s($\theta$)] de ladite lèvre (1) présente un taux de contraction supérieur au taux de contraction de base CRb ; et
   - ce taux de contraction supérieur est maximal à la section verticale inférieure [s(0)] de ladite lèvre et décroît, progressivement et symétriquement, en direction desdites sections horizontales (Sb) où il prend la valeur CRb.

8. Entrée d'air selon l'une des revendications 1 à 7,
   **caractérisée en ce que** :

- le profil interne [5s(θ)] des sections inférieures [s(θ)] de ladite lèvre (1) comporte, en arrière du bord d'attaque 7s(θ), un amincissement (12) imposant une position reculée vers l'arrière pour le col [6s(θ)] ;
- ledit amincissement (12) est d'autant plus important que l'angle de scarf Sc est plus grand ; et
- ledit amincissement (12) est maximal à la section verticale inférieure s(0) de ladite lèvre (1) et décroît, progressivement et symétriquement, en direction desdites sections horizontales Sb, où il disparaît.

**Claims**

1. Air inlet for the nacelle (2) of a commercial aircraft jet engine, the said air inlet having its axis (M-M) coincident with that of the said engine and exhibiting the form of an annular lip (1) which comprises:

   - an external annular aerodynamic surface (3) linking up with the external surface (4E) of the said nacelle (2);
   - an internal annular aerodynamic surface (5) linking up with the internal surface (4I) of the said nacelle (2) and channeling the air to the said engine, the said internal annular aerodynamic surface (5) comprising an annular throat (6) and forming at least in part a diffuser for the said engine; and
   - a plane annular leading edge (7) formed at the link-up of the said external (3) and internal (5) annular aerodynamic surfaces,

   so that any section of the said annular lip (1) through a diametral plane P(θ) making an angle θ with respect to the vertical diametral plane (V-V) of the said air inlet comprises an external profile, an internal profile, a throat and a leading edge corresponding respectively to the traces, in the said diametral plane, of the said external (3) and internal (5) annular aerodynamic surfaces, of the annular throat and of the said annular leading edge,
   the said air inlet being symmetric with respect to the said vertical diametral plane (V-V) and being of the scarf type with the lower part (1I) of the said lip (1) forward with respect to the upper part (1S) of the latter and the said annular leading edge (7) inclined with respect to the said axis (M-M), the inclination of the said annular leading edge (7) being defined, in the said vertical diametral plane (V-V), by the scarf angle Sc between the trace of the plane of the said leading edge (7) and the direction (8) perpendicular to the said axis, and each section of the said annular lip (1) through such a diametral plane P(θ) being defined by :

   - the rate of contraction CR(θ) which is equal to the square of the ratio of the distance E(θ) of the leading edge from the said axis and of the distance C(θ) of the throat from the said axis;
   - the distance a(θ), parallel to the said axis, between the throat and the leading edge;
   - the distance b(θ), perpendicular to the said axis, between the throat and the leading edge; and
   - the ratio r(θ) = a(θ)/b(θ);

   the rate of contraction CR(θ) and this ratio r(θ) having the base values CRb and rb respectively for the said horizontal sections of the said lip (1), for which θ = 90°,
   **characterized in that**:

   - the rate of contraction CR(0) of the upper vertical section S(0) is equal to

$$CR(0) = CRb + a1 \times Sc,$$

   in which expression a1 is a constant;
   - the ratio r(0) of the upper vertical section is equal to:

$$r(0) = rb + a2 \times Sc,$$

   in which expression a2 is a constant,
   - the rate of contraction CR(θ) of the upper section S(θ) of the lip (1) through the said diametral plane P(θ) making the angle θ with the vertical plane satisfies the equation:

$$CR(\theta) = CRb + [CR(0) - CRb] \times \cos\theta;$$

and

- the ratio $r(\theta)$ of the said upper section $S(\theta)$ of the lip (1) through the said diametral plane $P(\theta)$ making the angle $\theta$ with the vertical plane satisfies the equation:

$$r(\theta) = rb + [r(0) - rb] \times \cos\theta.$$

2. Air inlet according to claim 1,
   **characterized in that**, the scarf angle Sc being expressed in degrees, the constant a1 has a value lying between 0.002 and 0.008.

3. Air inlet according to one of claims 1 or 2,
   **characterized in that**, the scarf angle Sc being expressed in degrees, the constant a2 has a value lying between -0.03 and 0.

4. Air inlet according to one of claims 1 to 3,
   **characterized in that**:

   - with respect to the two horizontal sections (Sb) of the said lip (1), the external profile [3S($\theta$)] of the upper sections S($\theta$)) of the said lip (1) comprises an external bulge (11) commencing behind the leading edge [7S($\theta$)];
   - the larger the scarf angle Sc, the bigger the external bulge (11); and
   - the said external bulge (11) is a maximum at the upper vertical section S(0) of the lip (1) and decreases, progressively and symmetrically, toward the said horizontal sections (Sb), where it disappears.

5. Air inlet according to claim 4, in which, for each upper section S($\theta$), we denote by c($\theta$) the distance, perpendicular to the said axis, between the leading edge [7s($\theta$)] and the point D($\theta$) of the said external profile [3S($\theta$)], whose distance d($\theta$) from the said leading edge, parallel to the said axis, is equal to a tenth of the distance E($\theta$) of the leading edge from the said axis (M-M), the ratio $\rho(\theta)$ = c($\theta$)/d($\theta$) presenting the base value pb for the said horizontal sections of the said lip (1),
   **characterized in that**:

   - the ratio p(0) of the upper vertical section S(0) is equal to

$$\rho(0) = \rho b + a3 \times Sc,$$

   in which expression a3 is a constant; and
   - the ratio $\rho(\theta)$ of the upper section S($\theta$) of the lip through the diametral plane making the angle $\theta$ with the vertical plane (V-V) satisfies the equation:

$$\rho(\theta) = \rho b + [\rho(0) - \rho b] \times \cos\theta.$$

6. Air inlet according to claim 5,
   **characterized in that**, the scarf angle Sc being expressed in degrees, the constant a3 has a value lying between 0 and 0.04.

**7.** Air inlet according to claim 1,
**characterized in that**:

- the internal profile [5s(θ)] of the lower sections [s(θ)] of the said lip (1) exhibits a greater rate of contraction than the base rate of contraction CRb; and
- this greater rate of contraction is a maximum at the lower vertical section [s(0)] of the said lip and decreases, progressively and symmetrically, toward the said horizontal sections (Sb) where it takes the value CRb.

**8.** Air inlet according to one of claims 1 to 7,
**characterized in that**:

- the internal profile [5s(θ)] of the lower sections [s(θ)] of the said lip (1) comprises, at the rear of the leading edge 7s(θ), a thinning (12) imposing a rearward retreated position for the throat [6s(θ)];
- the larger the scarf angle Sc, the bigger the thinning (12);
- the said thinning (12) is a maximum at the lower vertical section s(0) of the said lip (1) and decreases, progressively and symmetrically, toward the said horizontal sections Sb, where it disappears.


**Patentansprüche**

**1.** Lufteinlass für die Gondel (2) eines Strahltriebwerks eines Passagierflugzeuges, wobei die Achse (M-M) des Lufteinlasses eins ist mit der Achse des Triebwerks und die Form einer ringförmigen Lippe (1) hat, die aufweist:

- eine ringförmige aerodynamische Außenfläche (3), die sich an die Außenfläche (4E) der Triebwerksgondel (2) anschließt;
- eine ringförmige aerodynamische Innenfläche (5), die sich an die Innenfläche (4I) der Triebwerksgondel (2) anschließt und die Luft zum Triebwerk leitet, wobei die ringförmige aerodynamische Innenfläche (5) einen ringförmigen Hals (6) aufweist und wenigstens teilweise einen Verteiler für das Triebwerk bildet; und
- eine ebene ringförmige Eintrittskante (7), die an der Verbindungsstelle der ringförmigen aerodynamischen Außenfläche (3) und Innenfläche (5) ausgebildet ist,

so dass jeder Schnitt der ringförmigen Lippe (1) durch eine diametrale Ebene P(θ), die mit der vertikalen diametralen Ebene (V-V) des Lufteinlasses einen Winkel θ bildet, ein Außenprofil, ein Innenprofil, einen Hals und eine Eintrittskante aufweist, die den jeweiligen Linienzügen, in der diametrale Ebene, der ringförmigen aerodynamischen Außenfläche (3) und Innenfläche (5), des ringförmigen Halses und der ringförmigen Eintrittskante entsprechen, wobei der Lufteinlass zu der vertikalen diametralen Ebene (V-V) symmetrisch ist und zu dem Typ der abgeschrägten Lufteinlässe gehört, bei denen der untere Teil (11) der Lippe (1) weiter nach vorne ragt als der obere Teil (1S) der Lippe (1) und die ringförmige Eintrittskante (7) schräg zur Achse (M-M) ist, wobei die Schrägstellung der ringförmigen Eintrittskante (7) in der vertikalen diametralen Ebene (V-V) definiert ist durch den Scarf-Winkel Sc zwischen dem Linienzug der Ebene der Eintrittskante (7) und der Richtung (8) lotrecht zur Achse, und wobei jeder Schnitt der ringförmigen Lippe (1) durch eine solche diametrale Ebene P(θ) definiert ist durch:

- das Verengungsverhältnis CR(θ), das gleich dem Quadrat des Verhältnisses der Entfernung E(θ) der Eintrittskante von der Achse und der Entfernung C(θ) des Halses von der Achse ist;
- die Entfernung a(θ), parallel zur Achse, zwischen dem Hals und der Eintrittskante;
- die Entfernung b(θ), lotrecht zur Achse, zwischen dem Hals und der Eintrittskante; und
- das Verhältnis r(θ) = a(θ)/b(θ);

wobei das Verengungsverhältnis CR(θ) und dieses Verhältnis r(θ) die Basiswerte CRb beziehungsweise rb für die horizontalen Schnitte der Lippe (1) haben, für die θ= 90°,
**dadurch gekennzeichnet, dass**:

- das Verengungsverhältnis CR(0) des oberen vertikalen Schnitts S(0) gleich

$$CR(0) = CRb + a1 \times Sc$$

ist, wobei a1 in diesem Ausdruck eine Konstante ist;
- das Verhältnis r(0) des oberen vertikalen Schnitts gleich

$$r(0) = rb + a2 \times Sc$$

ist, wobei a2 in diesem Ausdruck eine Konstante ist;
- das Verengungsverhältnis CR(θ) des oberen Schnitts S(θ) der Lippe (1) durch die diametrale Ebene P(θ), die mit der vertikalen Ebene den Winkel θ bildet, die Gleichung

$$CR(\theta) = CRb + [CR(0) - CRb] \times \cos\theta$$

erfüllt; und
- das Verhältnis r(θ) des oberen Schnitts S(θ) der Lippe (1) durch die diametrale Ebene P(θ), die mit der vertikalen Ebene den Winkel θ bildet, die Gleichung

$$r(\theta) = rb + [r(0) - rb] \times \cos\theta$$

erfüllt.

2.  Lufteinlass nach Anspruch 1,
    **dadurch gekennzeichnet, dass** die Konstante a1, wenn der Scarf-Winkel Sc in Grad ausgedrückt wird, einen Wert zwischen 0,002 und 0,008 hat.

3.  Lufteinlass nach einem der Ansprüche 1 oder 2,
    **dadurch gekennzeichnet, dass** die Konstante a2, wenn der Scarf-Winkel Sc in Grad ausgedrückt wird, einen Wert zwischen -0,03 und 0 hat.

4.  Lufteinlass nach einem der Ansprüche 1 bis 3,
    **dadurch gekennzeichnet, dass**:

    - das Außenprofil [3S(θ)] der oberen Schnitte S(θ) der Lippe (1) im Vergleich zu den beiden horizontalen Schnitten (Sb) der Lippe (1) eine Außenverdickung (11) aufweist, die hinter der Eintrittskante [7S(θ)] beginnt;
    - die Außenverdickung (11) umso dicker ist, je größer der Scarf-Winkel Sc ist; und
    - die Außenverdickung (11) an dem oberen vertikalen Schnitt (SO) der Lippe (1) am größten ist und schrittweise und symmetrisch in Richtung der horizontalen Schnitte (Sb) abnimmt, wo sie verschwindet.

5.  Lufteinlass nach Anspruch 4, bei dem man für jeden oberen Schnitt S(θ) c(θ) die Entfernung nennt, lotrecht zur Achse, zwischen der Eintrittskante [7S(θ)] und dem Punkt D(θ) des Außenprofils [3S(θ)], dessen Entfernung d(θ) von der Eintrittskante, parallel zur Achse, gleich dem Zehntel der Entfernung E(θ) der Eintrittskante von der Achse (M-M) ist, wobei das Verhältnis p(θ) = c(θ)/d(θ) für die horizontalen Schnitte der Lippe (1) den Basiswert pb hat,
    **dadurch gekennzeichnet, dass**:

    - das Verhältnis p(0) des oberen vertikalen Schnitts S(0) gleich

$$p(0) = pb + a3 \times Sc$$

ist, wobei a3 in diesem Ausdruck eine Konstante ist; und
- das Verhältnis p(θ) des oberen Schnitts S(θ) der Lippe durch die diametrale Ebene, die mit der vertikalen Ebene (V-V) den Winkel θ bildet, die Gleichung

$$p(\theta) = pb + [p(0) - pb] \times \cos\theta$$

erfüllt.

6. Lufteinlass nach Anspruch 5,
**dadurch gekennzeichnet, dass** die Konstante a3, wenn der Scarf-Winkel Sc in Grad ausgedrückt wird, einen Wert zwischen 0 und 0,04 hat.

7. Lufteinlass nach Anspruch 1,
**dadurch gekennzeichnet, dass**:

   - das Innenprofil [5s($\theta$)] der unteren Schnitte [s($\theta$)] der Lippe (1) ein Verengungsverhältnis aufweist, das größer ist als das Basis-Verengungsverhältnis CRb; und
   - dieses größere Verengungsverhältnis an dem unteren vertikalen Schnitt [s(0)] der Lippe am größten ist und schrittweise und symmetrisch in Richtung der horizontalen Schnitte (Sb) abnimmt, wo es den Wert CRb annimmt.

8. Lufteinlass nach einem der Ansprüche 1 bis 7,
**dadurch gekennzeichnet, dass**:

   - das Innenprofil [5s($\theta$)] der unteren Schnitte [s($\theta$)] der Lippe (1) hinter der Eintrittskante 7s($\theta$) eine Verdünnung (12) aufweist, so dass der Hals [6s($\theta$)] nach hinten versetzt ist;
   - die Verdünnung (12) umso stärker ausgeprägt ist, je größer der Scarf-Winkel Sc ist; und
   - die Verdünnung (12) an dem unteren vertikalen Schnitt (s(0) der Lippe (1) am stärksten ausgeprägt ist und schrittweise und symmetrisch in Richtung der horizontalen Schnitte Sb geringer wird, wo sie verschwindet.

Fig. 1

Fig. 2

Fig. 3

EP 1 308 387 B1

Fig. 4